# EUROPEAN PATENT SPECIFICATION

(11) **EP 1 092 621 B1**
(45) Date of publication and mention of the grant of the patent: **13.12.2006**
(21) Application number: 00121977.3
(22) Date of filing: 09.10.2000
(51) Int. Cl.: B62M 23/02

(54) **Battery remaining power meter for power-assisted bicycle**
Batteriezustandsmesser für Fahrrad mit Hilfsantrieb
Compteur d'énergie électrique restante de batterie pour bicyclette à assistance motorisée

(30) Priority: 13.10.1999 JP 29165599
(43) Date of publication of application: 18.04.2001
(73) Proprietor: HONDA GIKEN KOGYO KABUSHIKI KAISHA, Minato-ku, Tokyo (JP)
(72) Inventor: Nagura, Hidenori, 4-1, Chuo 1-chome, Wako-shi, Saitama (JP); Komuro, Nobuaki, 4-1, Chuo 1-chome, Wako-shi, Saitama (JP); Shimmura, Hiroyuki, 4-1, Chuo 1-chome, Wako-shi, Saitama (JP); Nakagomi, Yoshio, 4-1, Chuo 1-chome, Wako-shi, Saitama (JP)
(74) Representative: Liska, Horst

(56) References cited:
- EP-A- 0 822 135
- DE-A- 19 600 243
- US-A- 5 798 702
- PATENT ABSTRACTS OF JAPAN vol. 1999, no. 10, 31 August 1999 (1999-08-31) -& JP 11 137611 A (HONDA MOTOR CO LTD), 25 May 1999 (1999-05-25)
- PATENT ABSTRACTS OF JAPAN vol. 1999, no. 09, 30 July 1999 (1999-07-30) -& JP 11 105759 A (MITSUBISHI HEAVY IND LTD), 20 April 1999 (1999-04-20)

## Description

### Technical Field to which the Invention Pertains

This invention relates to a battery remaining power meter of a power-assisted bicycle, and more particularly to a battery remaining power meter for a power-assisted bicycle on which a battery remaining power can be confirmed readily.

### Prior Art

A bicycle wherein a driving system by human power and another driving system by an electric motor as an auxiliary power source are provided parallelly and driving torque by human power, that is, treadling force, is detected and then the auxiliary power source is energized in response to the detected treadling force to assist the treadling force is disclosed, for example, in the official gazette of Japanese Patent Laid-Open No. Hei 11-105759.

In this conventional apparatus, a battery is disposed along a seat post in front of the seat post, and a display panel is provided on a front face of a lower portion of the battery. A battery remaining power indicating light, a pushbutton switch and so forth are disposed on the display panel.

### Problem to be Solved by the Invention

With the conventional apparatus described above, since the display panel is provided on the front face of the lower portion of the battery, if the driver wants to observe the remaining power of the battery, then the driver must move its head into a stepping over portion of the bicycle and peek into the display panel, and there is a problem that it is difficult to confirm the remaining power of the battery. Particularly, in a power-assisted bicycle intended for a user of a person well advanced in age, it is necessary to pay attention to a person who has weak sight.

It is an object of the present invention to eliminate the problem of the prior art described above and provide a battery remaining power meter of a power-assisted bicycle which allows a driver to confirm the battery remaining power in an easy posture.

### Means for Solving the Problem

In order to attain the object described above, according to the present invention, a remaining power meter of a battery of a power-assisted bicycle which is disposed along a seat post on which a seat is supported has a first characteristic in that the remaining power meter is disposed on an inclined face which is at an upper portion of the battery and is directed to a location around an outer periphery of the seat. According to the characteristic, if a user looks down at the upper face of the battery which is directed to the location around the periphery of the seat while the user remains in a standing posture at a position at which the user supports bicycle, then the user can visually observe a battery remaining power. Consequently, the user in an easy posture can confirm the battery remaining power readily.

According to the present invention, the remaining power meter of a battery of a power-assisted bicycle has a second characteristic in that the inclined face which is directed to the location around the outer periphery of the seat is on the left side of the bicycle. According to the characteristic, since a user usually stands on the left side of the bicycle immediately before the user gets on the bicycle or immediately after the user gets off the bicycle, the user can visually observe the battery remaining power while the user remains in a standing posture immediately before the user gets on the bicycle or immediately after the user gets off the bicycle.

Further, according to the present invention, the remaining power meter of a battery of a power-assisted bicycle has a third characteristic in that the inclined face which is directed to the location around the outer periphery of the seat is on the rear side of the bicycle. According to the characteristic, since a user frequently stands rather rearwardly on the left side of the bicycle immediately before the user gets on the bicycle or immediately after the user gets off the bicycle, the user can visually observe the battery remaining power simply if the user looks down at the top face of the battery while the user remains in a posture immediately before the user gets on the bicycle or immediately after the user gets off the bicycle.

### Effect of the Invention

As apparent from the foregoing description, according to the invention as set forth in claims 1 to 3, since the battery remaining power meter is disposed on an inclined face which is at an upper portion of the battery and is directed to a location around an outer periphery of the seat, the user can look at the battery remaining power meter if the user looks down at the battery from obliquely upwardly in an ordinary standing posture without moving the face of the user toward the stepping over portion of the bicycle to look into the battery remaining power meter. Consequently, the user can confirm the battery remaining power readily.

According to the present invention as set forth in claims 2 and 3, since the inclined face is positioned on the left side and the rear side of the bicycle, respectively, if the user stands, as in an ordinary behavior, on the left side of the bicycle before the user gets on the bicycle or after the user gets off the bicycle, then the user can visually observe the battery remaining power in an easy posture in which the user merely looks down at the upper face of the battery, and this provides a significant effect in terms of practical use..

### Mode for Carrying out the Invention

In the following, embodiments of the present invention are described in detail with reference to the drawings.

### Brief Description of the Drawings

FIG. 1 is a view of a general construction of a power-assisted bicycle to which the present invention is applied.
FIG. 2 is a schematic perspective view of a battery and an accommodating case.
FIG. 3 is an enlarged view of a construction of essential part of FIG. 1.
FIG. 4 is a top plan view of a rear portion of the battery in a mounted state of the battery.
FIG. 5 is a top plan view of the rear portion of the battery when an operation lever is pushed.
FIG. 6 is a schematic perspective view of a contact unit.
FIG. 7 is a top plan view of the rear portion of the battery in a mounted state of the battery in another embodiment of the present invention.
FIG. 8 is a top plan view when the operation lever of FIG. 7 is pushed.
FIG. 9 is a top plan view of the rear portion of the battery as viewed from above.
FIG. 10 is a top plan view of a wheel lock apparatus of an embodiment of the present invention.
FIG. 11 is a sectional view taken along line A-A of FIG. 10.
FIG. 12 is a perspective view showing a relationship of the battery and wheel lock apparatus and a vehicle body.
FIG. 13 is an enlarged view of essential part of FIG. 3.
FIG. 14 is a view of a structure of an example of a pivoting apparatus for a bicycle seat.
FIG. 15 is a sectional view taken along line X-X of FIG. 14.
FIG. 16 is a side elevational view of an electrical auxiliary unit 1 and a battery accommodating case 5.
FIG. 17 is a view illustrating an inserting and removing manner of the battery.
FIG. 18 is a top plan view of an operation/displaying panel of a battery remaining power meter provided on the battery.

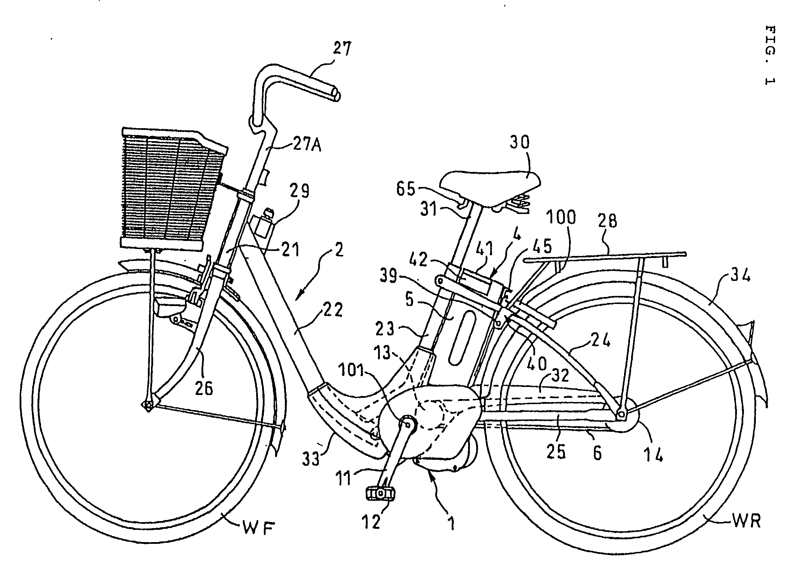

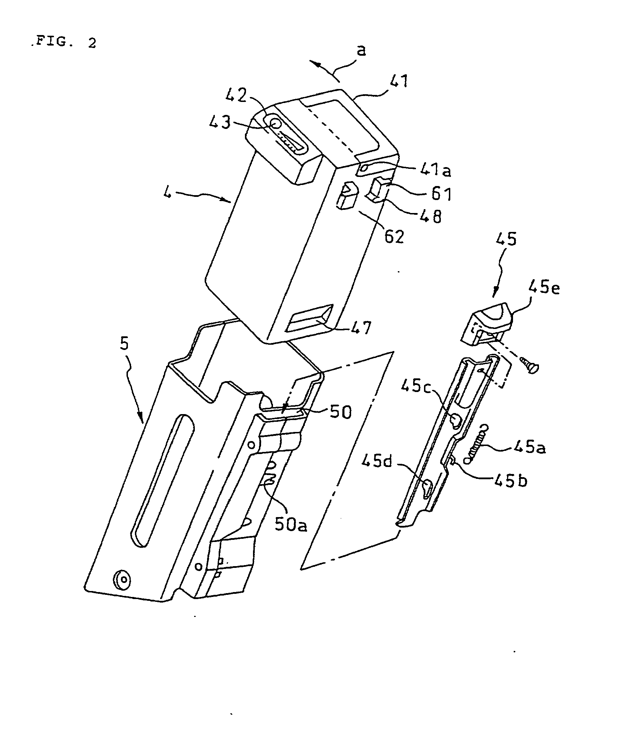

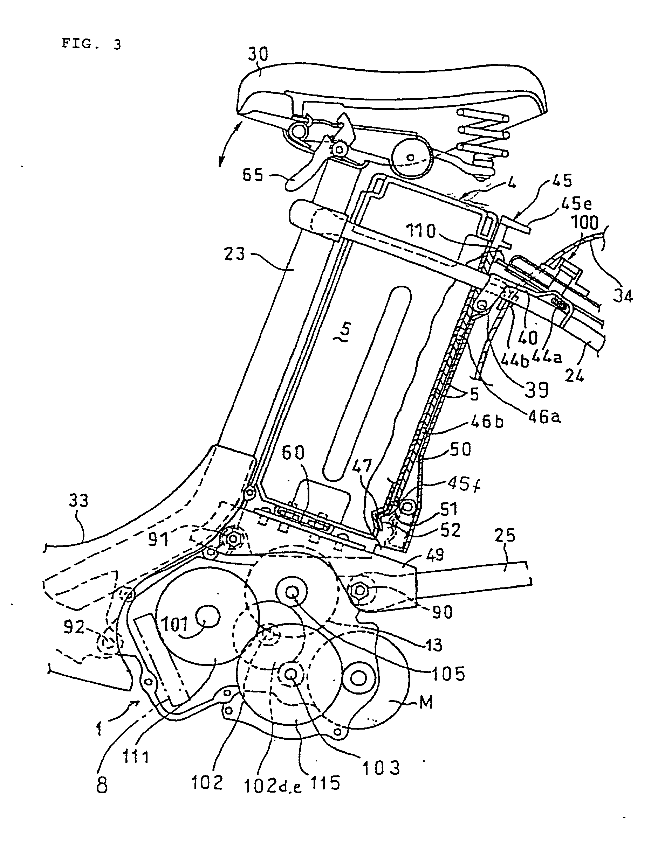

FIG. 1 is a side elevational view of a power-assisted bicycle to which an electric auxiliary unit of the present invention is applied, FIG. 2 is a schematic perspective view of a battery and an accommodating case for the battery carried on the power-assisted bicycle, and FIG. 3 is an enlarged view of essential part of FIG. 1.

As shown in FIG. 1, a body frame 2 of a power-assisted bicycle includes a head pipe 21 positioned at a front portion of the vehicle body, a down pipe 22 extending rearwardly downwardly from the head pipe 21 and extending in a downwardly convex configuration, and a seat post 23 extending upwardly from a portion near a terminal portion of the down pipe 22. A coupling portion between the down pipe 22 and the seat post 23 and peripheral portions to the coupling portion are covered with a resin cover 33 which is divided into upper and lower portions and is removable. A steering handle bar 27 is fitted for pivotal motion at an upper portion of the head pipe 21 through a pipe 27A, and a front fork 26 which is steered by the steering handle bar 27 is supported for steering motion at a lower end of the head pipe 21. A front wheel WF is supported for rotation at a terminal end of the front fork 26.

As shown in FIG. 3, an electrical auxiliary unit 1 including an electric motor for assisting the treadling force is suspended at a lower portion of the body frame 2 by tightening screws at three locations of a rear end 92 of the down pipe 22, a front portion 91 of a battery bracket 49 welded to the seat post 23 and a rear portion 90 of the battery bracket 49 together with a chain stay 25. The power supply switch 29 of the electrical auxiliary unit 1 is provided in the proximity of the head pipe 21 on the down pipe 22 such that it may be switched on/off by a power supply key. It is to be noted that the power supply switch 29 may be provided on the steering handle bar 27 forwardly of the handle post 27A.

In the vehicle body, since the coupling portion between the down pipe 22 and the seat post 23 is laid out at a front portion of the electrical auxiliary unit 1, the electrical auxiliary unit 1 can be disposed at a low position and the center of gravity can be provided at a low position. Further, since the height of the frame can be suppressed low, the "easiness in stepping over" is enhanced.

A crankshaft 101 is supported for rotation on the electrical auxiliary unit 1, and a pair of pedals 12 are supported for rotation at the opposite left and right ends of the crankshaft 101 through a crank 11. A rear wheel WR serving as a driving wheel is supported for rotation between terminal ends of a pair of left and right chain stays 25 which extend rearwardly from the electrical auxiliary unit 1. A pair of left and right seat stays 24 are provided between an upper portion of the seat post 23 and the terminal ends of both chain stays 25. A seat pipe 31 having a seat 30 at an upper end thereof is mounted for sliding movement in the seat post 23 so as to allow adjustment of the vertical position of the seat 30.

A battery accommodating case (hereinafter referred to as accommodating case) 5 for accommodating a battery 4 therein is mounted at a rear portion of the seat post 23 below the seat 30. The battery 4 includes a plurality of battery cells accommodated in a battery case of a substantially parallelepiped and is disposed along the seat post 23 such that the longitudinal direction thereof may be a substantially vertical direction.

A grip 41 attached to the battery 4 as shown in FIG. 2 is provided at a location displaced to the right side of the vehicle body at an end portion (upper end in FIG. 1) of the battery 4 in the longitudinal direction. The grip 41 is mounted for pivotal motion around a pivot shaft 41a and normally pressed against a corner of the battery 4. Generally since a driver stands on the left side of the vehicle body, the grip 41 is disposed on the right side of the vehicle body while the pivot shaft 41a of the grip 41 is disposed on the left side of the vehicle body so that the grip 41 can be erected readily in a direction of an arrow mark a.

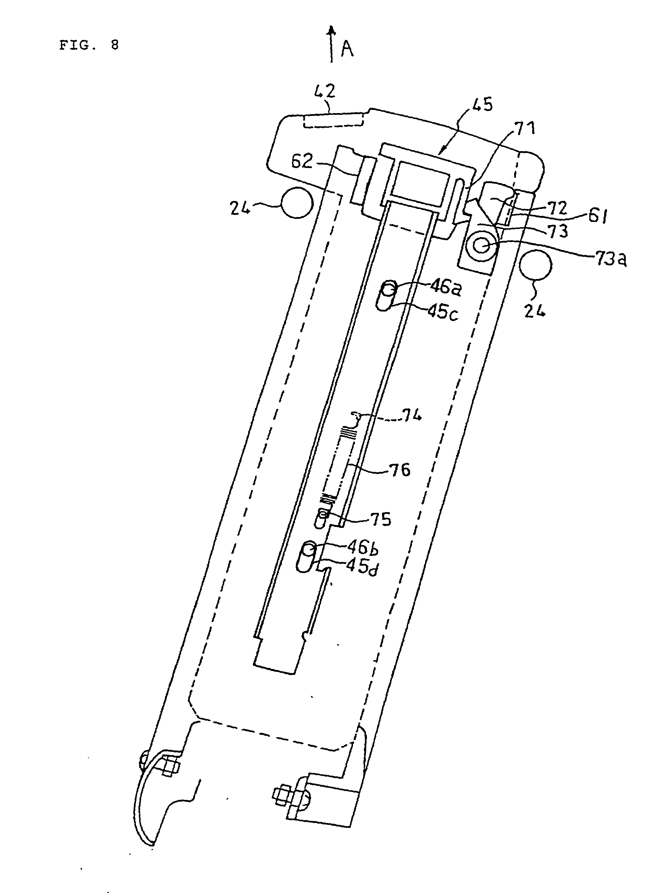

A battery remaining power meter 42 is provided at a side portion of an upper face of the battery 4 on which the grip 41 is provided, and if a pushbutton 43 is depressed, then a charged remaining power of the battery is displayed on a remaining power indicator section only for a predetermined time. The remaining power meter 42 is mounted on a leftwardly inclined face so that it can be confirmed from upwardly on the left side of the seat 30. Consequently, the driver can confirm the battery remaining power from above while remaining in a standing state. In FIG. 8, the remaining power meter 42 and the seat 30 lowered to the lowest position are shown, and a face of the remaining power meter 42 is formed such that it is directed to an outer periphery of the left side of the seat (an arrow mark A).

An operation lever 45 and a wheel lock apparatus 100 for locking and unlocking the battery 4 are provided rearwardly of the battery 4. The operation lever 45 is inserted in a side chamber 50 (refer to FIG. 2) provided on the rear side of the battery accommodating case and elongated in the vertical direction with a substantially rectangular cross section. An engaging hook 52 biased toward the battery 4 by a torsion spring 51 is provided at a lower portion of the side chamber 50 as shown in FIG. 3. The engaging hook 52 engages, when a battery is loaded, with a recessed portion 47 provided at a lower portion of the battery 4 and having an "L" shaped section to fix the battery to the accommodating case 5. It is to be noted that reference character 45a of FIG. 2 denotes a spring which extends between a hook-shaped projection 45b of the operation lever 45 and a cut and erected piece 50a projecting to the inner side of the side chamber 50 as becomes clear from the description hereinafter given.

An upper portion of the battery accommodating case 5 is secured by a screw 39 to a bracket 40 secured to the seat stays 24 by welding or the like, and also the wheel lock apparatus 100 and a rear fender 34 are secured to the bracket 40 by screws 44a and 44b, respectively.

The crankshaft 101, a speed up gear 82, a motor M, a gear 83, an idle shaft 84, a driving sprocket wheel 13 provided with a gear 13A and so forth are disposed in the electrical auxiliary unit 1. The motor M is fed from the battery 4 and generates auxiliary power corresponding to a treadling force detected by a treadling power detector not shown. The auxiliary power is combined with driving torque by human power exerted on the crankshaft 101 and is transmitted to a wheel sprocket wheel 14 of the rear wheel WR through the driving sprocket wheel 13 and a chain 6. The entire driving sprocket wheel 13 and an upper half of the chain 6 are covered with a chain cover 32.

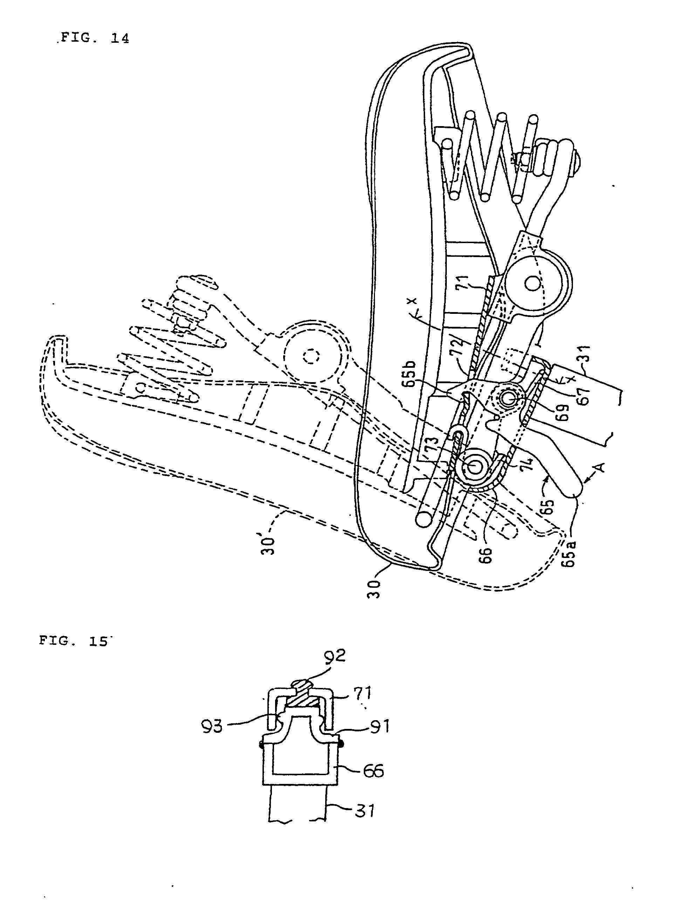

FIG. 14 is a view of a structure of a pivoting apparatus for the bicycle seat, and FIG. 15 is a sectional view taken along line X-X of FIG. 14.

As shown in FIGS. 14 and 15, a first bracket 66 is securely mounted at an upper end of the seat pipe 31 by welding. A cross section of the first bracket 66 in the leftward and rightward directions has a channel-shape, and a shaft 69 extends for rotation on the opposite left and right walls of the first bracket 66. A lever 65 is securely mounted at the center of the shaft 69 in its lengthwise direction, and a torsion spring 67 is fitted around the shaft 69 and is anchored at one end thereof at the lever 65 and at the other end thereof at the first bracket 66. The lever 65 is biased in the counterclockwise direction by the torsion spring 67. An operation portion 65a of the lever 65 extends forwardly downwards to a lower portion of the front side of the seat 30 and can be visually observed readily when viewed from sidewardly by the user in a standing posture. The user can thus find out the operation portion 65a simply even if the user does not bend and look up into the insider of the seat 30 from below while stooping as with the conventional apparatus.

Meanwhile, a second bracket 71 is secured to the back side of the seat 30 at a position opposing to the first bracket 66, and an arresting hole 72 for allowing a latching portion 65b provided at an end portion of the lever 65 to pass therethrough is formed at a predetermined position of a central portion of the second bracket 71. Also the second bracket 71 has a channel-shaped cross section in the leftward and rightward directions, and the opposite left and right walls at an end portion of the second bracket 71 are placed alongside the opposite left and right walls at an end portion of the first bracket 66 such that ones of them are positioned inside and the others of them are positioned outside. A pivot shaft 73 extends in the leftward and rightward directions between the overlapping portions of them, and a torsion spring 74 is fitted around a central portion of the pivot shaft 73. As a result, the second bracket 71 and the seat 30 are biased in the counterclockwise direction by the torsion spring 74.

As shown in FIG. 15, an upper projection 91 for suppressing a play of the seat 30 in the leftward and rightward directions is provided by welding on the first bracket 66, and rubber 92 as a cushioning material is filled between the upper projection 91 and the second bracket 71. The upper projection 91 extends into the inside of the second bracket 71 and prevents the seat 30 from suffering from a play in the leftward and rightward directions.

If the user pushes the operation portion 65a of the lever 65 in the direction of an arrow mark A, that is, obliquely leftwardly upwards in order to perform exchanging of the battery 4 or the like, then the latching portion 65b of the lever 65 is disengaged from the arresting hole 72 of the second bracket 71, and the seat 30 is resiliently pivoted in the counterclockwise direction by the spring force of the torsion spring 74. Then, the seat 30 is pivoted to a position 30' indicated by broken lines. The pivoted position is a position in which the battery 4 and the seat 30 do not interfere with each other when the battery 4 is pulled up in the upward direction. Upon such pivotal motion, since the lever 65 and the mounting member for the lever 65 on the bracket remain on the first bracket 66 side, the weight of the seat on the second bracket 71 side which is pivoted can be reduced as much. Consequently, the pivotal motion of the seat can be performed light and the burden to the pivot shaft 73 can be reduced.

When the seat 30 is to be returned to the normal position upon running of the bicycle, if the seat 30 is pivoted in the clockwise direction against the spring force of the torsion spring 74, then when it comes to its substantially horizontal position, the latching portion 65b is brought into contact with an edge of the arresting hole 72. As the seat 30 is further pivoted in the same direction, the latching portion 65b is pivoted in the clockwise direction against the spring force of the torsion spring 67, and when the edge of the arresting hole 72 passes by the latching portion 65b, the latching portion 65b is resiliently engaged with the arresting hole 72 by the returning force of the torsion spring 67. Consequently, the seat 30 returns to and stops at the solid line position of FIG. 14.

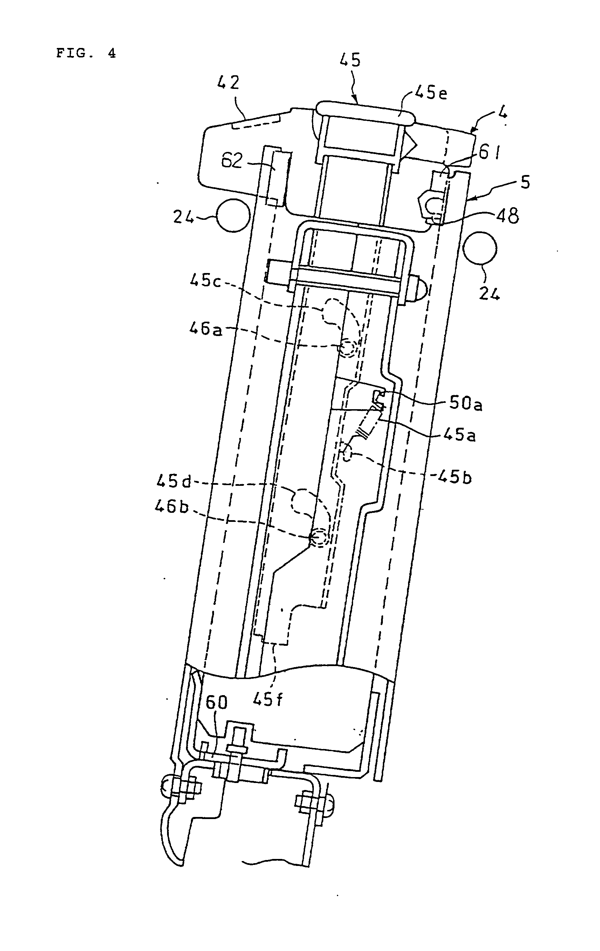

Now, a configuration of rear portions of the battery 4 and the accommodating case 5 is described in detail with additional reference to FIG. 4. FIG. 4 is a front elevational view of rear portions of the battery 4 and the accommodating case 5.

As shown in FIG. 4, the accommodating case 5 is installed between two upper arms 24 and is disposed such that, when the battery 4 is accommodated in the accommodating case 5, a projection of the accommodating case 5 having the battery remaining power meter 42 on an upper face thereof is positioned on the left side rear upper arm 24. An operation portion 45e extending rearwardly is provided at a top portion of the operation lever 45, and two guide holes 45c and 45d extending obliquely rightwardly downwards are provided at an upper portion and a lower portion at the center in the lengthwise direction. Projecting pins 46a and 46b (refer to FIG. 3) securely mounted on an inner wall of the side chamber 50 of the battery accommodating case are fitted in the guide holes. The operation lever 45 is biased upwardly by the spring 45a which extends between the hook-shaped projection 45b provided at a lower portion with respect to a central portion of the operation lever 45 and the cut and erected piece 50a of the side chamber 50.

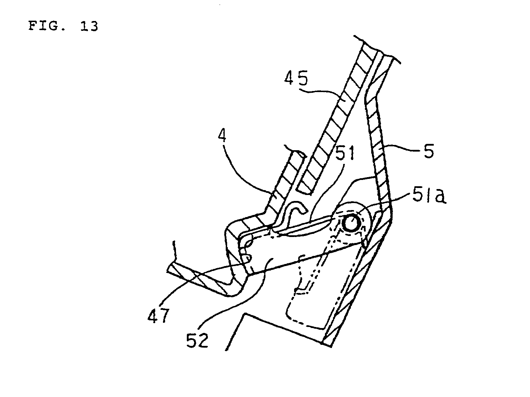

As can be seen apparently from an enlarged view of FIG. 13, the engaging hook 52 biased in the clockwise direction as viewed from the right side by the torsion spring 51 provided around a shaft of a pivot shaft 51a engages with the "L" shaped recessed portion 47 of the battery 4. Since the battery 4 is secured at a lower portion thereof by the engaging hook 52, even if the vehicle body oscillates, the battery 4 does not move in the upward or downward direction or the leftward or rightward direction, but maintains a stable seated state. Further, even if the user tilts the seat 30 forwardly and grips the grip 41 to try to pull the battery 4 in the stable state upwardly, the battery 4 cannot be pulled out.

In the engagement means described above, the pivot shaft 51a serving as a fulcrum of the pivotal motion is provided rearwardly above the recessed portion 47 of the battery and the engaging hook 52 holds down the battery as a result of the pivotal motion, and consequently, the engagement means acts to suppress upward movement of the battery from obliquely upwardly in a diction in which the battery is to be pulled out. Accordingly, while the rearward projection amount of the engagement means is reduced, the engagement means can make its engaging force act in the pulling out direction of the battery effectively.

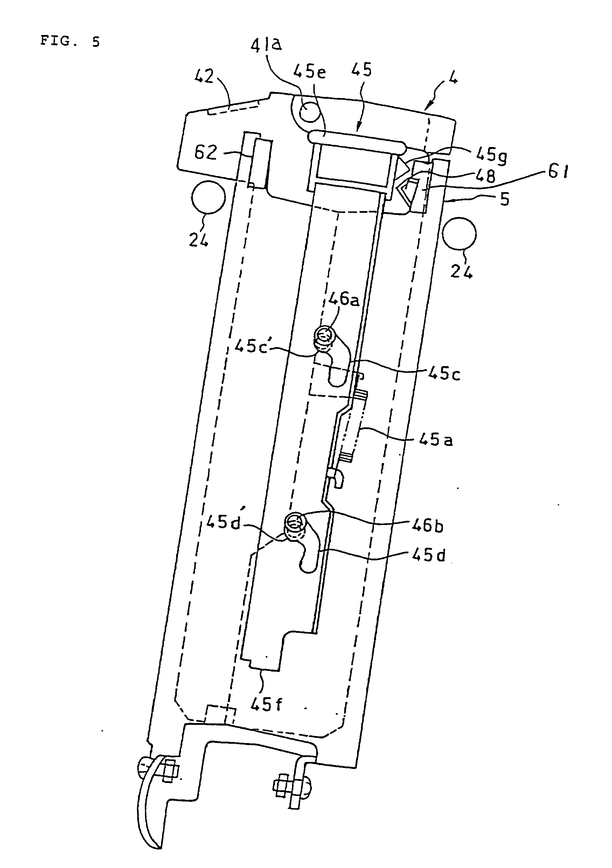

Subsequently, operation when the battery 4 is pulled out from the accommodating case 5 is described with reference to FIG. 5. In order to pull out the battery 4 from the accommodating case 5, the lever 65 is operated first to allow the seat 30 to be pivoted forwardly to a position at which the seat 30 does not make an obstacle to pulling out of the battery, and then the operation portion 45e of the operation lever 45 is pressed downwardly. Consequently, the operation lever 45 is moved obliquely rightwardly downwards as viewed from the rear against the spring force of the spring 45a under the guidance of the guide holes 45c and 45d. In the process of the movement, a lower end 45f of the operation lever 45 is brought into contact with the top end of the engaging hook 52 and presses the top end downwardly. As a result, the engaging hook 52 is pivoted in the counterclockwise direction (indicated by broken lines in FIG. 3), whereupon the engagement between the hook 52 and the "L" shaped recessed portion 47 of the battery 4 is cancelled.

Thus, if the user releases the operation portion 45e of the operation lever 45, then the operation lever 45 tends to be pivoted upwardly by the spring force of the spring 45a. Thereupon, however, the projecting pins 46a and 46b are engaged with lower sides 45c' and 45d' of upper portions of the guide holes 45c and 45d so that the operation lever 45 is stopped at the position. Accordingly, the user can release the operation lever and perform an operation of raising the battery using the hand which has been used to operate the operation lever, and consequently, pulling out of the battery can be performed with one hand and the operability is augmented.

Then, if the user grips the grip 41 of the battery 4 with its hand (right hand) and raises it, then the battery 4 can be pulled out from the accommodating case 5. At this time, a projection 48 formed at an upper portion of the battery 4 is engaged with a projection 45g formed in a projecting state on the right side of an upper portion of the operation lever 45 so that the operation lever 45 is lifted a little in an oblique leftwardly upward direction. Consequently, the engagement of the projecting pins 46a and 46b with the lower sides 45c' and 45d' is cancelled and the operation lever 45 returns to the original position, that is, the position of FIG. 4. Also the engaging hook 52 naturally returns to the solid line position of FIG. 3.

Therefore, there is no need of performing an operation for returning the operation lever again after the battery is pulled out, and the pulling out of the battery can be performed further simply. Further, even if the operation lever is pushed in a state wherein no battery is mounted, the operation lever is held at the pushed position, and also in this state, if a battery is inserted, then the projection 48 and the projection 45g are contacted with each other and the operation lever can return to the state shown. Accordingly, there is no problem even if the lever is pushed in error.

Then, if the user inserts a charged up battery 4 into the accommodating case 5 from above the accommodating case 5, then when the entire battery 4 almost enters the accommodating case 5, the lower end of the battery 4 is brought into contact with a side portion of the engaging hook 52 and pushes the engaging hook 52 in the counterclockwise direction as viewed from the right side. As the battery 4 is further accommodated to the interior of the accommodating case 5, the engaging hook 52 is resiliently engaged with the "L" shaped recessed portion 47 of the battery 4 and the battery 4 is secured to the accommodating case 5. Simultaneously, + and - output terminals (discharge contacts) provided on the bottom of the battery 4 are electrically and mechanically connected to a contact unit 60 secured by a screw to the battery bracket 49 (refer to FIG. 3) securely mounted on the seat post 23 by welding or the like. This connection is stabilized by the self weight of the battery 4 and the pressing by the engaging hook 52.

According to such a securing structure for a battery as described above, a securing structure for a battery can be provided which is compact and favorable in operability in that, while the battery engagement means stably keeps connection of the contacts at a position in the proximity of the contacts while making effective use of the dead space below a rear portion of the battery, the operation section for the engagement means is at a position above a rear portion of the battery which is a position at which the user can operate the operation section very easily.

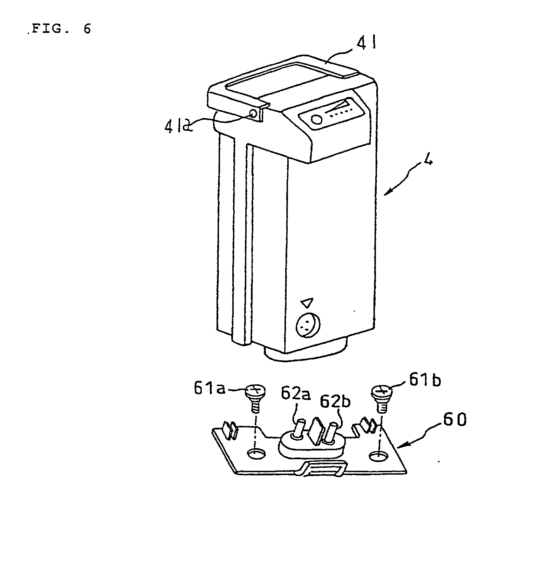

FIG. 6 is a schematic perspective view of the battery 4 and the contact unit 60. The contact unit 60 is secured to the battery bracket 49 by screws 61a and 61b. Two contact terminals 62a and 62b extending in the upward and downward directions are connected to the + and - output terminals formed on the bottom of the battery 4 to allow power to be supplied to the electrical auxiliary unit 1.

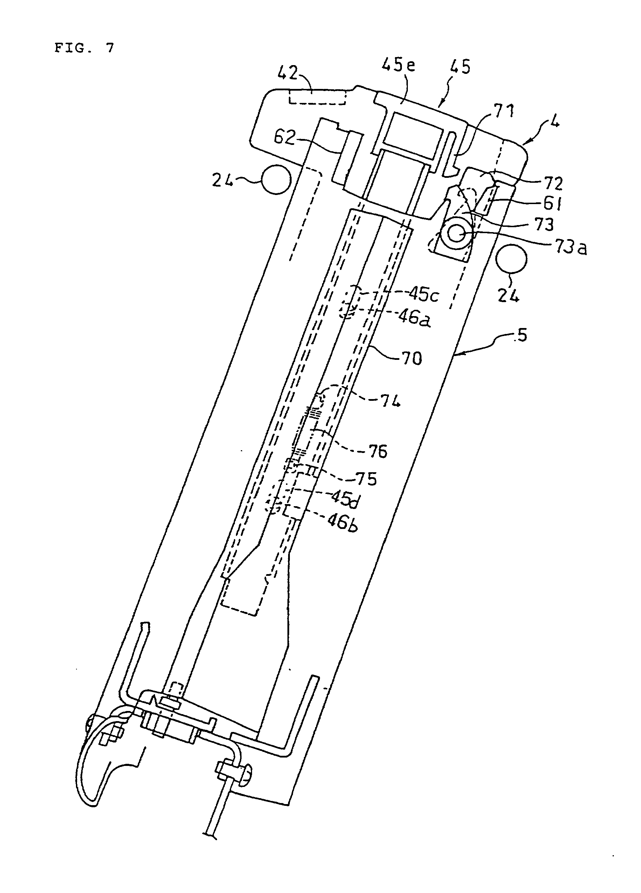

Subsequently, a second embodiment of the present invention is described with reference to FIGS. 7 and 8. The present embodiment is constructed such that, while, in the first embodiment described above, the operation lever 45 is displaced obliquely rightwardly downwards when the operation lever 45 is pushed downwardly, the operation lever 45 is moved straightforwardly downwardly so that the operation lever may not have a play in the leftward and rightward directions.

The width of a side chamber 70 of the battery accommodating case 5 in the lateral direction is a little greater than the width of the operation lever 45 in the same direction, and the side chamber 70 serves as a guide for the movement in the upward and downward directions of the operation lever 45. A first hook 71 is provided sidewardly of the operation portion 45e of the operation lever 45 such that it extends downwardly, and a second hook 73 which can be pivoted around a pivot shaft 73a is provided in an opposing relationship to the first hook 71 on the accommodating case 5. A spring 76 extends between a pin 75 provided at a position of the operation lever 45 a little lower than a central portion of the same and a cut and erected piece 74 provided in the side chamber 70. Further, in a state wherein the battery 4 is accommodated fully in the accommodating case 5, a projection 72 formed on a side wall of an upper portion of the battery 4 contacts with and presses down an oblique upper side portion of the second hook 73. Consequently, the second hook 73 is pivoted by a predetermined angle in the counterclockwise direction.

FIG. 9 is a top plan view of the rear portions of the battery 4 and the accommodating case 5 common in the first and second embodiments, and upper position control members 61 and 62 provided on the battery 4 are engaged with predetermined recessed portions formed on the accommodating case 5, that is, by convex and concave engagement so that the position of the upper portion of the battery 4 with respect to the accommodating case 5 is controlled. Further, the engaging hook 52 is biased toward the battery 4 by the torsion spring 51 fitted around a bolt 63 extending in the side chamber 50 and is engaged with the "L" shaped recessed portion 47 provided on the side wall of the lower portion of the battery 4. This engagement relationship is similar to that in the first embodiment described hereinabove. The upper position control members 61 is formed integrally with the projection 48 or 72 provided on the same side.

In the present second embodiment, in order to remove the battery 4 from the accommodating case 5, the lever 65 is operated to tilt the seat 30 forwardly to retract the seat 30 from a removing or mounting path of the battery 4 and then the operation portion 45e of the operation lever 45 is pushed downwardly with a hand in a similar manner as in the first embodiment. Consequently, as shown in FIG. 8, the operation lever 45 is moved straightforwardly downwardly against the spring force of the spring 76 until an end of the first hook 71 is brought into contact with an end of the second hook 73. At this time, since the hook 73 is pressed from above by the projection 72 of the battery, the first hook 71 is deformed leftwardly and is further moved downwardly while contacting with the end portion of the second hook 73 until it is engaged with the second hook 73. Consequently, even if the user releases the operation lever 45, the operation lever 45 is kept as it is in the engaging position. Accordingly, similarly as in the first embodiment, the user can remove its hand from the operation lever. When the operation lever 45 is pushed to the engaging position, the end of the operation lever 45 presses the engaging hook 52 to cancel the engagement between the engaging hook 52 and the "L" shaped recessed portion 47 similarly as in the first embodiment.

Then, if the user grips the grip 41 with its hand and raises it in order to remove the battery 4 from the accommodating case 5, then also the projection 72 moves upwardly and releases the pressing of the second hook 73. As a result, since the operation lever is moved upwardly by the force of the spring 76 for the operation lever 45, the second hook 73 is pivoted together with the operation lever to a broken line position of FIG. 7, in which it waits insertion of the battery 4. Therefore, the hook 73 does not require specific biasing force in its pivoting direction, and the structure is simplified.

Thereafter, if a battery 4 charged up is inserted fully into the accommodating case, then the projection 72 presses the second hook 73 again so that the second hook 73 is pivoted by a predetermined angle in the counterclockwise direction and stops there. Then, the state of FIG. 7 is restored. At this time, the engagement relationship between the engaging hook 52 and the "L" shaped recessed portion 47 is established, and apparently the battery 4 is secured to the accommodating case 5.

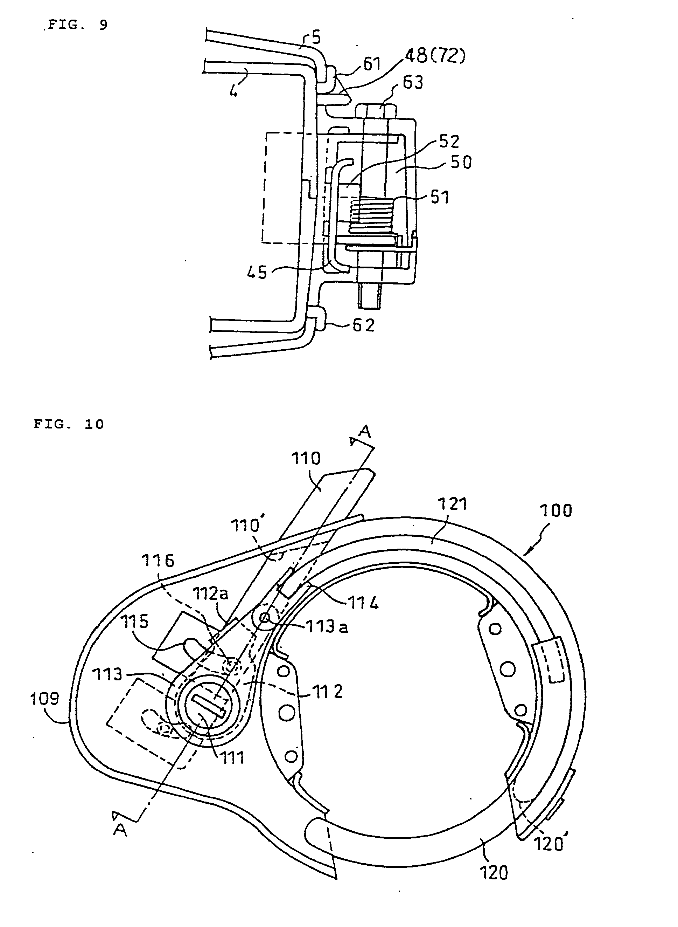

Subsequently, a construction of the wheel lock apparatus 100 (refer to FIGS. 1 and 3) is described with reference to FIGS. 10 and 11. FIG. 10 is a top plan view of the wheel lock apparatus 100, and FIG. 11 is a sectional view taken along line A-A of FIG. 10.

The wheel lock apparatus 100 has a function of locking and unlocking the battery 4 and the rear wheel WR. A lock plate 110 is a member which locks and unlocks the battery 4, and the lock plate 110 locks when it is in a projecting state (state of FIG. 10), but unlocks when it is in a retracted state. Meanwhile, a lock bar 120 is a member for locking and unlocking the rear wheel WR.

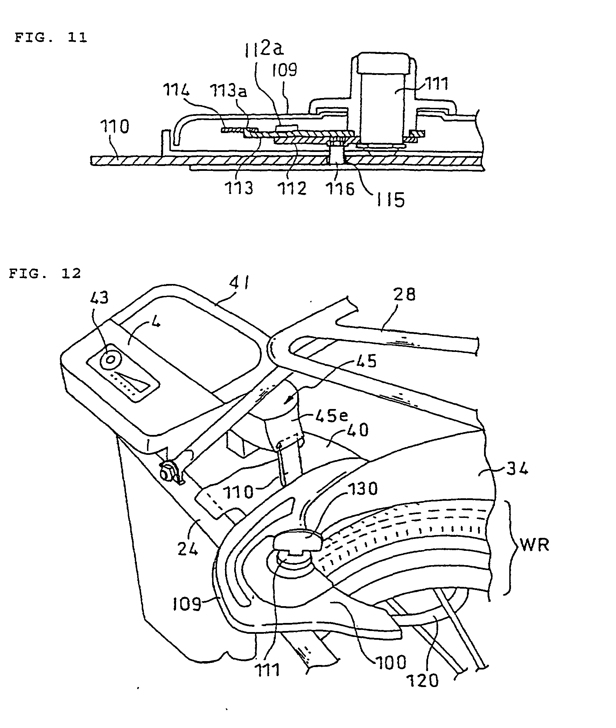

A key cylinder 111 is secured in the vertical direction at a predetermined position of a housing 109, and a cam plate 112 is securely mounted at a lower portion of the key cylinder 111. The cam plate 112 is held in engagement, at a latching portion 112a formed by bending part of a periphery thereof laterally, with a first link plate 113. The first link plate 113 and a second link plate 114 are linked to each other by a association pin 113a, and an end of a wire cable 121 is connected to the second link plate 114. The other end of the wire cable 121 is connected to an end of the lock bar 120. A doughnut-shaped cam hole 115 is formed in a base portion of the lock plate 110, and a pin 116 extending downwardly from a lower face of the cam plate 112 is loosely fitted in the cam hole 115. It is to be noted that the first link plate 113 is normally biased in the counterclockwise direction by a spring not shown so that it engages with the latching portion 112a of the cam plate 112. FIG. 12 is a perspective view of the vehicle body around the rear portion of the battery when the wheel lock apparatus is in a locking state, and like reference characters in FIG. 12 to those in FIGS. 3 and 10 denote the same or equivalent elements.

As apparent from FIGS. 3, 10 and 12, in the wheel lock apparatus 100 of the present embodiment, upon locking, the lock plate 110 projects from the housing 109 and extends downwardly below the operation portion 45e of the operation lever 45 to prevent the operation lever 45 from being pushed downwardly. Consequently, even if the operation lever 45 is pushed downwardly by a third party upon locking, the engagement between the engaging hook 52 and the "L" shaped recessed portion 47 of the battery 4 is not cancelled and the battery 4 cannot be pulled out upwardly. Simultaneously, the lock bar 120 projects and surrounds the rear wheel WR to prevent rotation of the rear wheel WR. Consequently, when the user stops the bicycle and locks the wheel, also the operation lever 45 is locked simultaneously, and the battery 4 cannot be removed while the user stays far away from the vehicle.

Then, if a legal key 130 (which should serve also as a power supply key) is inserted into the key cylinder 111 and turned over a predetermined angle in the counterclockwise direction, then the locking by the wheel lock apparatus 100 is cancelled, and the lock plate 110 is retracted to a position 110' indicated by broken lines. Simultaneously, the lock bar 120 is retracted to a position 120' indicated by broken lines.

Accordingly, when the user is present near the vehicle body and the wheel is unlocked, the engagement between the battery 4 and the accommodating case 5 is cancelled if the user merely pushes the operation portion 45e of the operation lever 45 downwardly without performing any key operation, and consequently, the battery 4 can be pulled out from the accommodating case 5. Consequently, the removing and mounting operations of the battery 4 are very easy.

As described above, according to the first and second embodiments, since the battery remaining power meter is disposed on a left inclined face at an upper portion of a battery on the left side of a bicycle, the user can confirm a battery remaining power easily in a standing posture from a position at which the user stands immediately before getting on the bicycle, that is, from a position on the left side of the bicycle.

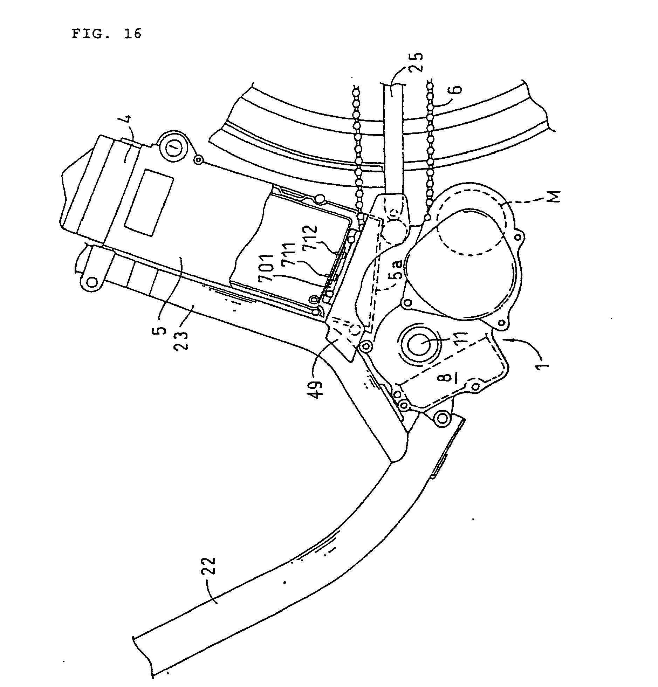

Now, a third embodiment of the present invention is described with reference to FIGS. 16, 17 and 18. FIG. 16 is a side elevational view of elements around the electrical auxiliary unit 1 and the battery accommodating case 5 of the power-assisted bicycle, and in FIG. 16, the chain cover, pedals and so forth are omitted to facilitate understanding of the figure. It is to be noted that like reference characters in those figures to those of FIGS. 1 to 3 denote the same or equivalent elements.

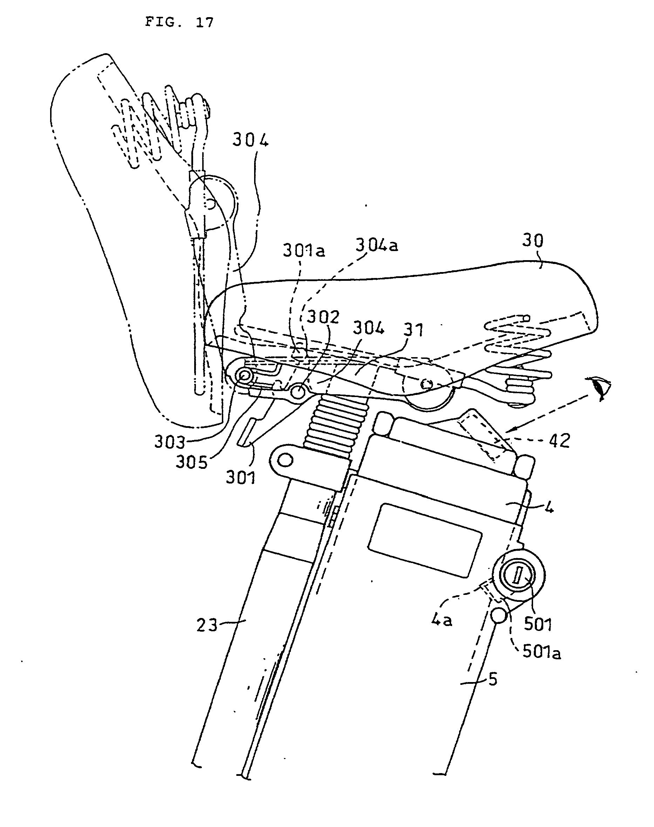

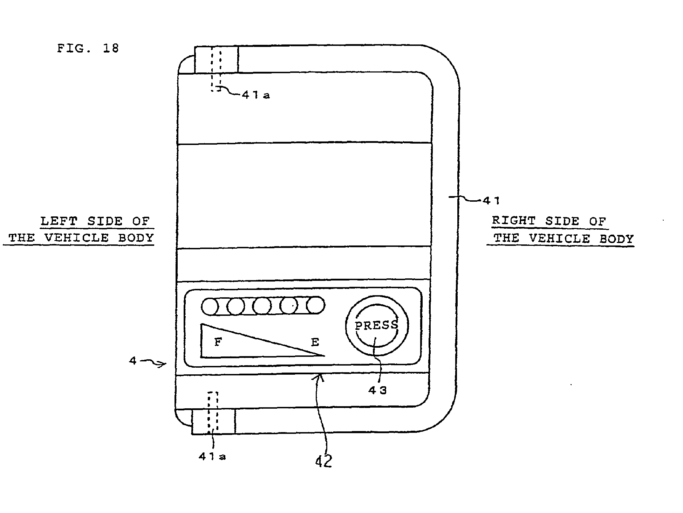

In the present embodiment, as apparent from FIGS. 16 and 17, the battery accommodating case 5 for accommodating a battery 4 is mounted at a rear portion of the seat post 23 below the seat 30. The battery 4 includes a plurality of battery cells accommodated in a battery case of a substantially parallelepiped and is installed along the seat post 23 such that the longitudinal direction thereof may be a substantially vertical direction. The grip 41 is provided at an end portion of the battery 4 in the longitudinal direction displaced to the right side of the vehicle body (the pivot shaft 41a is provided on the left side of the vehicle body) as shown in FIG. 18.

The grip 41 is mounted for pivotal motion and is normally pressed against the battery 4. Generally, since a driver stands on the left side of the vehicle body, the grip 41 can be raised readily since the grip 41 is disposed on the right side of the vehicle body while the pivot shaft 41a for the grip 41 is disposed on the left side of the vehicle body.

The battery remaining power meter 42 is provided on an upper face of the battery 4 on which the grip 41 is provided, and a charge remaining power is displayed on the battery remaining power meter 42 if the pushbutton 43 is depressed. The remaining power meter 42 is mounted on a rear side inclined face indicated by an arrow mark in FIG. 17 so as to facilitate confirmation from a location above a rear position of the seat 30. Consequently, the driver can confirm the battery remaining power from above while the driver stands. In FIG. 17, the seat 30 is lowered to the lowest position similarly as in FIG. 8.

An electrode socket 701 is mounted at an upper portion of the electrical auxiliary unit 1 in a state wherein the electrical auxiliary unit 1 is mounted on the frame, and electrodes 711 and 712 are exposed to an upper face of the electrode socket 701. Leads (not shown) of the electrodes 711 and 712 extend through the case of the electrical auxiliary unit 1 and are connected to an electric motor M, a control unit 8 and so forth in the inside of the unit.

The battery accommodating case 5 of a tubular configuration is mounted rearwardly of the seat post 23 such that a skirt portion 5a of a bottom portion thereof extends across the battery bracket 49 which interconnects the seat post 23 and the chain stays 25, and the electrodes 711 and 712 of the electrode socket 701 are exposed to a bottom portion of the inside of the accommodating case 5. Contacts (not shown) which are contacted with and electrically connected to the electrodes 711 and 712 when the battery 4 is accommodated in the battery accommodating case 5 are provided on the bottom face of the battery 4.

The battery 4 is inserted and removed from above the accommodating case 5. However, since the seat 30 is present on the path for the insertion and removal of the battery 4, the battery 4 cannot be inserted or removed directly. Therefore, in the present embodiment, as shown in FIG. 17, when the battery 4 is to be inserted or removed, a seat lock lever 301 supported by a shaft 302 on a seat bracket 304 provided at an upper end of the seat pipe 31 is moved forwardly of the vehicle and rocked around the shaft 302 to cancel the engagement between a seat lock hook 301a and a hole 304a of the seat bracket 304. As a result, the seat bracket 304 is popped up forwardly around a shaft 303 by the resilient force of a spring 305 disposed in a compressed state between the seat lock lever 301 and the seat bracket 304, and then the seat 30 is raised by a manual operation, thereby to assure the path for the removal and insertion of the battery 4.

Locking means 501 is provided at a rear upper portion of the battery accommodating case 5 at a left side portion of the vehicle body. In a locking state, a locking pin 501a projects into the accommodating case 5 and is engaged with a recessed portion 4a of the battery 4 to prevent removal of the battery 4 from the accommodating case 5.

In the present embodiment, the battery 4 can be removed by turning the locking means 501 with a key for a power supply switch of the vehicle body to retract the locking pin 501a. It is to be noted that the locking pin 501a is normally biased to the projecting state, but if the battery 4 is inserted into the accommodating case 5, then the pin 501a is retracted to an unlocking position by the battery 4, and after the insertion is completed, the pin 501a is engaged with the recessed portion 4a to establish a latching state.

While, in the first to third embodiments, a battery remaining power meter is provided on a left inclined face of a battery or on a rear inclined face of an upper portion of a battery, the present invention is not limited to them, and the battery remaining power meter may be provided on an inclined face of any side only if the inclined face is provided at an upper portion of a battery. In other words, any face may be used if it is directed to a space adjacent to an outer periphery of a seat.

In summary, it is an object of the present invention to provide a battery remaining power meter of a power-assisted bicycle by which a battery remaining power can be confirmed in an easy posture.

A battery accommodating case 5 is disposed along a seat post on which a seat is supported, and a battery 4 is inserted into and removed from the battery accommodating case 5. A battery remaining power meter 42 is formed on an upper face of the battery 4 and a left side inclined face of the bicycle. Consequently, a user can confirm the battery remaining power in an easy posture by looking down at the upper face of the battery from a leftwardly upper position in a posture in which the user stands on the left side of the bicycle. The battery remaining power meter 42 may be provided on a rear side inclined face of an upper face of a battery or on an inclined face on any other side of an upper face of a battery.

## Claims

1. A remaining power meter (42) of a battery (4) of a power-assisted bicycle which is disposed along a seat post (23) on which a seat (30) is supported, **characterized in that**
said remaining power meter (42) is disposed on an inclined face which is at an upper portion of said battery (4) and is directed to a location around an outer periphery of said seat (30).

2. A remaining power meter (42) of a battery (4) of a power-assisted bicycle according to claim 1, **characterized in that** said inclined face which is directed to the location around the outer periphery of said seat (30) is on the left side of said bicycle.

3. A remaining power meter (42) of a battery (4) of a power-assisted bicycle according to claim 1, **characterized in that** said inclined face which is directed to the location around the outer periphery of said seat (30) is on the rear side of said bicycle.

## Patentansprüche

1. Restenergiemessgerät (42) einer Batterie (4) eines Fahrrads mit Kraftunterstützung, welches entlang einer Sattelstütze (23) angeordnet ist, an welcher ein Sattel (30) gehalten ist, **dadurch gekennzeichnet, dass**
das Restenergiemessgerät (42) an einer geneigten Fläche angeordnet ist, die sich an einem oberen Abschnitt der Batterie (4) befindet und zu einer Stelle in der Umgebung eines äußeren Rands des Sattels (30) hin ausgerichtet ist.

2. Restenergiemessgerät (42) einer Batterie (4) eines Fahrrads mit Kraftunterstützung gemäß Anspruch 1, **dadurch gekennzeichnet, dass** die geneigte Fläche, welche zu der Stelle in der Umgebung des äußeren Rands des Sattels (30) hin ausgerichtet ist, sich auf der linken Seite des Fahrrads befindet.

3. Restenergiemessgerät (42) einer Batterie (4) eines Fahrrads mit Kraftunterstützung gemäß Anspruch 1, **dadurch gekennzeichnet, dass** die geneigte Fläche, welche zu der Stelle in der Umgebung des äußeren Rands des Sattels (30) hin ausgerichtet ist, sich an der hinteren Seite des Fahrrads befindet.

## Revendications

1. Compteur d'énergie électrique restante (42) d'une batterie (4) d'une bicyclette à assistance motorisée, disposée le long d'un pilier pour selle (23) sur lequel une selle (30) est supportée, **caractérisé en ce que**
ledit compteur d'énergie restante (42) est disposé sur une face inclinée, qui se trouve à une partie supérieure de ladite batterie (4) et est orienté vers un emplacement autour d'une périphérie extérieure de ladite selle (30).

2. Compteur d'énergie électrique restante (42) d'une batterie (4) d'une bicyclette à assistance motorisée selon la revendication 1, **caractérisé en ce que** ladite face inclinée qui est orientée vers l'emplacement situé autour de la périphérie extérieure de ladite selle (30) est située sur le côté gauche de ladite bicyclette.

3. Compteur d'énergie électrique restante (42) d'une batterie (4) d'une bicyclette à assistance motorisée selon la revendication 1, **caractérisé en ce que** ladite face inclinée qui est orientée vers l'emplacement autour de la périphérie extérieure de ladite selle (30) est située du côté arrière de ladite bicyclette.
